# EUROPEAN PATENT SPECIFICATION

(11) **EP 2 199 912 B1**
(45) Date of publication and mention of the grant of the patent: **07.03.2012**
(21) Application number: 09179563.3
(22) Date of filing: 17.12.2009
(51) Int. Cl.: G06F 11/10, G06F 11/14

(54) **Method and apparatus for processing data**
Verfahren und Vorrichtung zur Datenverarbeitung
Appareil et procédé de traitement de données

(30) Priority: 22.12.2008 KR 20080131205
(43) Date of publication of application: 23.06.2010
(73) Proprietor: SAMSUNG ELECTRONICS CO., LTD., Suwon-si Gyeonggi-do 442-742 (KR)
(72) Inventor: Hwang, Sung-hee, Gyeonggi-do (KR)
(74) Representative: Davies, Robert Ean

(56) References cited:
- US-A- 5 446 747
- US-A1- 2004 177 308
- US-A1- 2008 123 420

## Description

Aspects of the present invention relate to a method and an apparatus for processing data, and more particularly, to a method and apparatus for processing data to reproduce signals of higher quality by re-decoding error-corrected data to be reproduced and performing error-correction on the re-decoded data.

Concurrently with the developments in related technologies, various methods storing data or transmitting data are being developed for higher capacity and more transmission bandwidth.

In the case of a data storage medium, the reliability of data written on a disc may be degraded due to various reasons, such as the effects of writing power or reproducing power, dirt, scratches, fingerprints, etc. Furthermore, as data capacity of a data storage medium increases, quality of signals reproduced from the data storage medium is degraded. In this regard, when more data is transmitted via a wired or wireless communication network, it is necessary to receive and transmit more data during the same time period. Therefore, communication failures increase, and thus, it becomes more difficult to receive clean signals. In other words, as data transmission via a communication network increases, reproduced signals have a relatively lower signal to noise ratio (SNR), and thus the quality of the signals is degraded.

For higher capacity data storage media, high-density structures, multi-layered structures, etc., are being researched. As the data capacity of a data storage medium increases, signals provided therefrom have a relatively lower signal to noise ratio (SNR). Thus, a method of correcting errors is required. To improve the recording density of a Blu-ray disc from 25GB to 40GB, the physical length of one channel bit is decreased from 74.50 nm to 46.5625 nm. Thus, signal reproduction therefrom becomes more difficult. Also, since more data is transmitted and received in a wireless network, communication failures increase, and thus it becomes more difficult to receive clean signals.

As another example, a 4-ray method, which records/reproduces signals 00, 01, 10, 11, has less discrimination power as compared to a binary method, which records/reproduces a signal 0 or a signal 1 from a physical location corresponding to one channel bit in the prior art, and thus the quality of signals regarding the 4-ray method is lower than signals regarding the binary method.

Compared to a wireless network, the binary method may correspond to a binary phase shift keying (BPSK) method, whereas the Q-ray method may correspond to a quadrature phase shift keying (QPSK) method. Unlike the BPSK method having only 2 phases, the QPSK method has 4 phases, and thus it is more difficult to discriminate signals in the QPSK method. Concepts similar thereto regarding a flash memory include single level cell (SLC) devices and multi level cell (MLC) devices.

To conclude, the Q-ray method, the QPSK method, and the MLC devices are advantageous in terms of higher capacity due to higher density, but generate relatively slower quality signals.

Generally, the degradation of quality of a signal can be overcome by lowering error-correction code rates. In other words, the degradation of quality of a signal can be overcome by increasing the quantity of additional information, such as parity bits for error correction. In this case, however, the loss of capacity corresponding to the lowered coding rate is inevitable.

Embodiments of the present invention aim to provide a method and a data processing apparatus to improve a quality of data by generating information regarding error correction while errors of the data are corrected and perform signal processing on the data based on the generated information.

The prior art document US2008/0123420 discloses an error detection and correction arrangement for data read out from an ECC-encoded flash memory array using a Soft-Input Soft-Output (SISO) decoding technique, whereby statistical error correction information are gathered and used for the data decoding process and wherein a look-up table is used to correlate threshold voltages with probability values associated with particular bits.

The document US5446747 discloses an Iterative decoding comprising multiple decoding stages for decoding a received ECC-redundancy encoded data under the use of interleaving/de-interleaving.

The document US2004/0177308 discloses an error correction mechanism of redundancy-encoded memory data employing an iterative decoding process formed by a first soft decoder and a second soft decoder, the second soft decoder having the output of the first soft decoder as input and wherein additional feed-back information from the first decoder operation is used for the second decoder operation.

According to an aspect of the present invention, there is provided a method of processing data in accordance with the appended independent claim 1.

The re-decoding of the extracted data may include detecting error-corrected data bits from among the data bits according to the data bit flags, and may include re-decoding the extracted data according to the detected data bits. Furthermore, the method may further include demodulating the decoded data prior to the correcting of the errors of the decoded data if the extracted data is data modulated after error correction code (ECC) encoding. Furthermore, the re-decoding of the extracted data may include generating channel bits by modulating the data bits and generating channel bit flags by modulating the data bit flags, and may include re-decoding the extracted data according to the channel bits and the channel bit flags.

Furthermore, if the extracted data is data interleaved after error correction code (ECC) encoding, the correction of the errors of the decoded data may include deinterleaving the decoded data, correcting errors of the deinterleaved data and interleaving the error-corrected data, and generating data bits and data bit flags indicating error-corrected data bits from among the data bits according to the interleaved data. Furthermore, the data may be extracted after at least one of being read out from an information storage medium or and being received from an external terminal via a communication network.

Furthermore, the correction of the errors of the decoded data may be performed using one of a Reed Solomon (RS) code, a Low-density parity-check (LDPC) code, or a Turbo code. Furthermore, the re-decoding of the extracted data and the correcting of the errors of the re-decoded data may be repeatedly performed until an error rate of the extracted data is reduced to a predetermined level.

According to another aspect of the present invention, there is provided a data processing apparatus in accordance with the appended independent claim 7.

According to another aspect of the present invention, there is provided a computer readable recording medium having recorded thereon a computer program for executing method of processing data in accordance with the appended independent claim 12.

Additional aspects and/or advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a block diagram of a data processing apparatus according to an embodiment of the present invention;
FIG. 2 is a block diagram of a data processing apparatus according to another embodiment of the present invention;
FIGs. 3A-3K are diagrams showing data processed according to a method of processing data according to an embodiment of the present invention;
FIGS. 4A-4F are diagrams for describing a concept of converting a data bit flag to a channel bit flag according to an embodiment of the present invention;
FIGs. 5A and 5B are diagrams for describing a method of phase shift modulation used in the data processing apparatuses shown in FIGS. 1 and 2, in case where the data processing apparatuses shown in FIGS. 1 and 2 transmit/receive data via a wired/wireless communication network;
FIGs. 6A and 6B are diagrams for describing an application of the present invention wherein signals detected from a flash memory are processed; and
FIG. 7 is a flowchart of a method of processing data according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

According to an embodiment of the present invention, signal process and error correction are repeatedly performed for improved error correction.

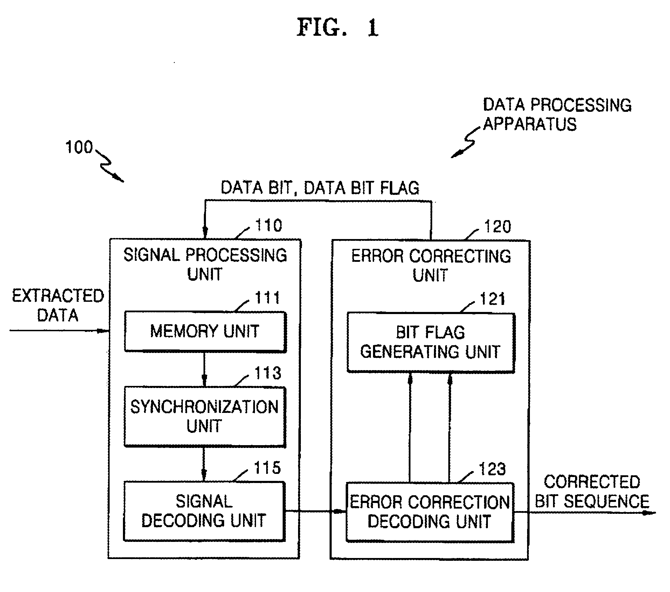

FIG. 1 is a block diagram of a data processing apparatus 100 according to an embodiment of the present invention. Referring to FIG. 1, the data processing apparatus 100 includes a signal processing unit 110 and an error correcting unit 120. The data processing apparatus 100 is an apparatus that reads data from an information storage medium such as a flash memory and receives data from an external terminal via a communication network and processes the data. The data processing apparatus 100 may further include a wired or wireless communication unit for performing communication with the external terminal via the communication network.

The signal processing unit 110 includes a memory unit 111, a synchronization unit 113, and a signal decoding unit 115. The memory unit 111 temporarily stores extracted data either read out from an information storage medium or received from an external source via the communication network. The synchronization unit 113 synchronizes feedback data from the error correcting unit 120 and the extracted data temporarily stored in the memory unit 111. The signal decoding unit 115 decodes the extracted data based on the feedback data.

The error correcting unit 120 corrects errors in the decoded data, and generates information regarding corrected bits. The error correcting unit 120 includes a bit flag generating unit 121 and an error correction decoding unit 123. The error correcting unit 120 corrects errors in data received from the signal processing unit 110 and generates a corrected bit sequence.

The bit flag generating unit 121 generates a data bit flag corresponding to an error-corrected data bit from among the generated data bits. The data bit flag is information indicating that errors of a corresponding data bit are corrected by the error correction decoding unit 123, and may be included in an error-corrected data bit as a flag. The error correcting unit 120 transmits feedback data bits decoded and generated by the error correction decoding unit 123 and data bit flags generated by the bit flag generating unit 121 to the signal processing unit 110.

The signal processing unit 110 re-decodes data stored in the memory unit 111 using data fed back from the error correcting unit 120. The signal processing unit 110 can determine error-corrected data bits from among the data bits by using the data bit flags received from the error correcting unit 120. The signal processing unit 110 uses the data bits determined as error-corrected data bits to perform signal processing on other data bits of which errors are not corrected, and thus errors of the other data bits are corrected and the quality of a signal of the data is further improved.

In a case where the data still has errors, the signal processing unit 110 sends the signal-processed data bits back to the error correcting unit 120. The error correcting unit 120 corrects errors of data bits received from the signal processing unit 110 again. Since the data bits of which errors are to be corrected by the error correcting unit 120 are data bits of which errors are corrected once, the error rate of the data bits is further reduced when the error correcting unit 120 corrects errors of the data bits again. The error correcting unit 120 generates data bits of which errors are corrected again and data bit flags with respect to the data bits. In a case where the data still has errors, the signal processing unit 110 sends the data bits and the data bit flags back to the error correcting unit 120.

The signal processing unit 110 and the error correcting unit 120 reduces the error rate of data by repeatedly performing the operations above until the data bits have zero errors, for a number of times predetermined by the data processing apparatus 100, or until the error rate of the data bits is reduced to a predetermined level.

According to the current embodiment, an error correcting unit feeds back information regarding a result of correcting errors after error-correction to the signal processing unit, and the signal processing unit performs signal processing again by using the result of correcting errors to generate signals of further improved quality. Furthermore, the error correcting unit receives signals of further improved quality and performs error-correction thereto again. Thus, the error rate of data is reduced.

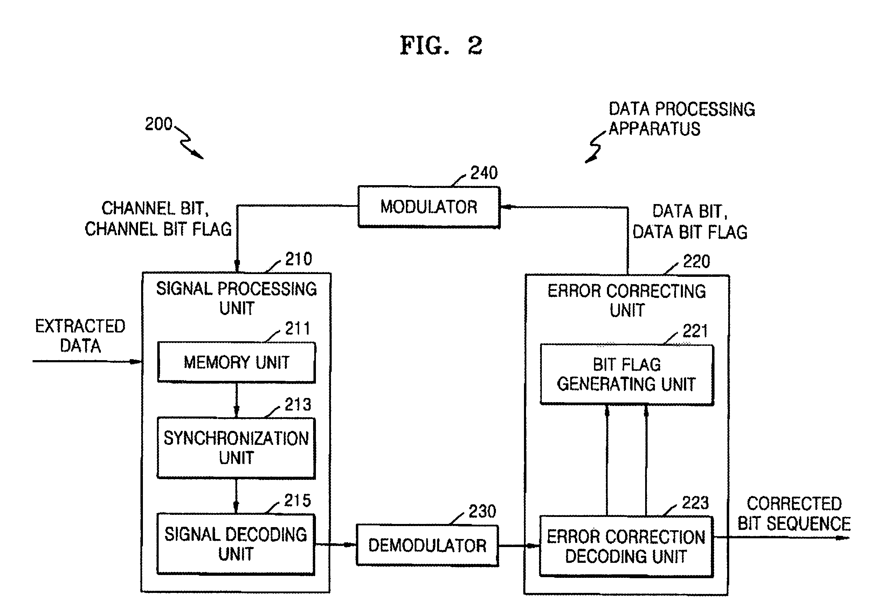

FIG. 2 is a block diagram of a data processing apparatus 200 according to another embodiment of the present invention. The data processing apparatus 200 includes a signal processing unit 210, an error correcting unit 220, a demodulator 230, and a modulator 240. Operations of the signal processing unit 210 and the error correcting unit 220 are almost identical to those of the signal processing unit 110 and the error correcting unit 120 shown in FIG. 1, respectively.

Reproduction of data is performed in reverse order of recording data. Therefore, in a case where data is stored in an information storage medium after error correction code (ECC) encoding and a data formatting operation, it is necessary for the data processing apparatus 200 to re-process data bits and data bit flags, which are generated by the error correcting unit 220according to a data format of the data formatting operation, so that the data processing apparatus 200 can send re-processed signals to the signal processing unit 210.

For example, it is assumed that data is recorded in an information storage medium, such as a DVD or a Blu-ray disc, after the data is ECC encoded and is modulated. Reproduction of the data is performed in the order of reading out data from the information storage medium, performing signal processing, such as equalizing (EQ) and partial response maximum likelihood (PRML) decoding to read-out signals, demodulating the processed signals, performing ECC decoding on the demodulated signals, and reproducing the data. In other words, when ECC encoded data is modulated and stored in an information storage medium, data read out from the information storage medium must be decoded, demodulated, and ECC decoded to reproduce the data stored in the information storage medium.

FIG. 2 is a block diagram of the data processing apparatus 200 for reading out and reproducing data stored in an information storage medium, wherein the data is stored in the information storage medium after the data is ECC encoded and is modulated according to channel characteristics. As shown in FIG. 2, the demodulator 230 and the modulator 240 are disposed between the signal processing unit 210 and the error correcting unit 220.

The signal processing unit 210 decodes extracted data either read out from the information storage medium or received from an external source via a communication network. The data decoded by the signal processing unit 210 is modulated while the data was encoded, and thus the signal processing unit 210 sends the decoded data to the demodulator 230. The demodulator 230 demodulates the data, and sends the demodulated data to the error correcting unit 220. The error correcting unit 220 corrects errors of the data received from the demodulator 230, and generates data bits and data bit flags corresponding to error-corrected data bits.

The data that the error correcting unit 220 received from the signal processing unit 210 is demodulated by the demodulator 230. Thus, it is necessary to modulate the data bits and the data bit flags generated by the error correcting unit 220 into a data format used by the signal processing unit 210 such that the data bits and the data bit flags can be fed back to the signal processing unit 210. For the modulation, the error correcting unit 220 sends the data bits and the data bit flags to the modulator 240. The modulator 240 modulates the data bits and the data bit flags according to channel characteristics, converts the data bits to channel bits, and converts the data bit flags to channel bit flags. The signal processing unit 210 decodes the data read out from the information storage medium again by using the channel bits and the channel bit flags.

If required, an interleaving method may be used for ECC encoding during data recording. In this case, a deinterleaving method should be used for ECC decoding. The interleaving method used therein may vary according to channel characteristics.

In a case where data that is interleaved during encoding is recorded in the information storage medium and the data is to be reproduced, the data processing apparatus 200 deinterleaves data received from either the signal processing unit 210 or the demodulator 230 and sends the deinterleaved data to the error correcting unit 220. The error correcting unit 220 corrects errors of the data, and interleaves the error-corrected data as the data was before the deinterleaving. The error correcting unit 220 sends the interleaved data to the signal processing unit 210.

Although a block performing interleaving and/or deinterleaving is not shown within the data processing apparatus 200 in FIG. 2, an interleaver and/or a deinterleaver may be further included as separate blocks if required.

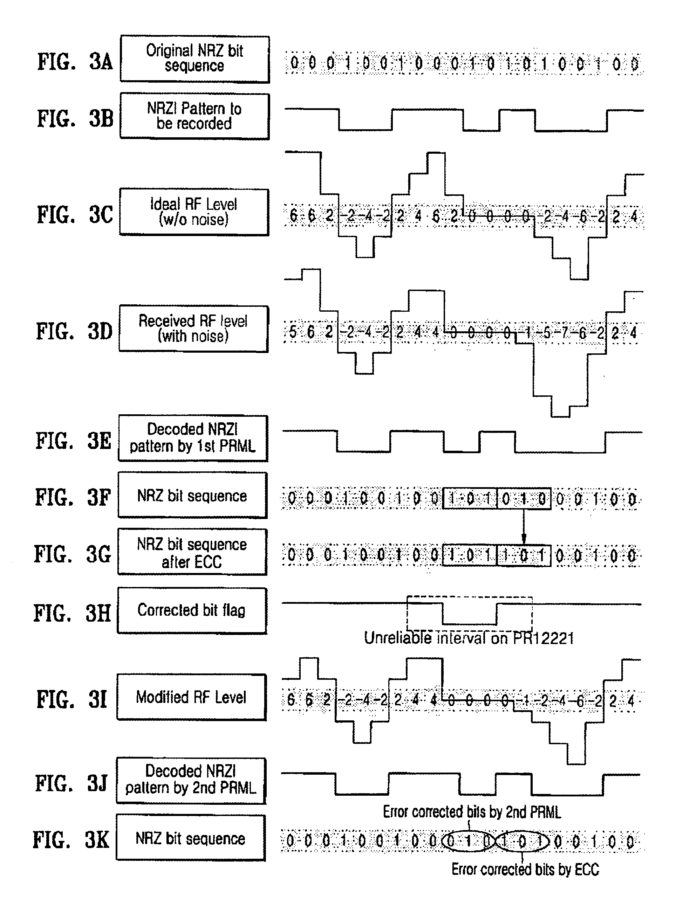

FIGs. 3A-3K are diagrams showing data processed according to a method of processing data according to an embodiment of the present invention. FIG. 3A shows an original non-return-to-zero (NRZ) bit sequence, which is generated while data is recorded. The original NRZ bit sequence is converted to a non-return-to-zero inverted (NRZI) pattern, as shown in FIG. 3B, and is recorded in an information storage medium.

Data is recorded or read-out with noise. If there is no noise and channel characteristics comply with partial response 12221 (PR12221) channel characteristics, the NRZI pattern shown in FIG. 3B may be indicated as an ideal RF level (without noise) as shown in FIG. 3C.

When data is reproduced based on the idea RF level, it is assumed that data read out from an information storage medium is a received RF level signal (with noise) as shown in FIG. 3D. The received RF level signal shown in FIG. 3D is decoded into a decoded NRZI pattern by a first PRML with Viterbi algorithm or a PR channel characteristic which is similar to the Viterbi algorithm, and a PRML which uses a phase lock loop (PLL) characteristic. In other words, the signal processing unit 110 or 210 generates a signal as shown in FIG. 3E by decoding a signal as shown in FIG. 3D using the difference between the RF level signal shown in FIG. 3D and the ideal RF level signal shown in FIG. 3C.

When the signal shown in FIG. 3E is re-oonverted to an NRZ pattern, the signal becomes a NRZ bit sequence as shown in FIG. 3F. It is clear that the NRZ bit sequence shown in FIG. 3F includes six bits with errors. The NRZ bit sequence shown in FIG. 3F is converted to data bits via the demodulator 230 and is input to the error correcting unit 220.

A NRZ bit sequence after ECC encoding, as shown in FIG. 3G, is a signal modulated by the modulator 240 after errors thereof are corrected. In other words, FIG. 3G shows NRZ data that are channel bits when data is modulated after errors of the data are corrected. It is clear that the last three bits with errors, of the NRZ bit sequence shown in FIG. 3G, are corrected, whereas the first three bits with errors are not corrected.

The error correcting unit 220 generates data bit flags indicating which data bits are error-corrected data bits. FIG. 3H shows a data bit flag, generated by the error correcting unit 220, indicating error-corrected data bits from among the NRZ bit sequence after ECC encoding, as shown in FIG. 3G, as signals having high values and other data bits as signals having low values. The section of FIG. 3H encircled with a dotted line indicates three bits as low. In the PR12221 channel, an RF level is determined based on two previous/next bits respectively. Thus, it is difficult to determine the ideal value of the RF level for the three bits indicated as low and the two previous/next bits, respectively, that is, it is difficult to determine the ideal value of the RF level for a section corresponding to a total of seven bits. Thus, the encircled section of FIG. 3H is an unreliable section.

Thus, a modified RF level shown in FIG. 3I is generated by replacing bits other than the seven bits of the unreliable section with the ideal RF level shown in FIG. 3C and maintaining the received RF level shown in FIG. 3D with respect to the seven bits.

When the signal processing unit 110 or 120 decodes a signal received from the error correcting unit 120 or 220 for the second time, the signal processing unit 110 or 210 decodes the signal using values of bits other than the low three bits, because true values of bits other than the low 3 bits are already known from the NRZ bit sequence shown in FIG. 3F and the data bit flag shown in FIG. 3H. More particularly, the signal processing unit 110 or 210 can obtain the decoded NRZI pattern using a second PRML, as shown in FIG. 3J, by decoding the modified RF level shown in FIG. 3I, and a NRZ bit sequence shown in FIG. 3K is obtained by NRZ converting the decoded NRZI pattern by second PRML. Referring to the NRZ bit sequence shown in FIG. 3K, it is clear that three bits of the six bits with errors are decoded to their original values. According to an embodiment of the present invention as described above, the quality of signals of data is improved by repeatedly performing signal processing and error correction, and thus error correction rate rises.

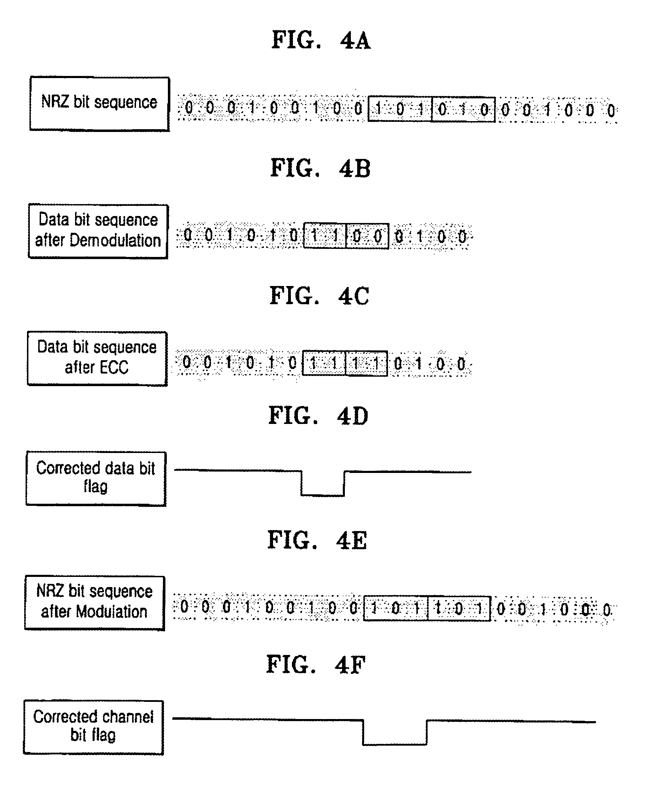

FIGS. 4A-4F are diagrams illustrating a concept of converting a data bit flag to a channel bit flag. It is assumed that a modulation code is 2/3 modulation in that two data bits are converted to three channel bits. A NRZ bit sequence having six bits with errors as shown in FIG. 4A is demodulated and is converted to data bits having four bits with errors. FIG. 4C shows data bits of which errors of two bits are corrected. FIG. 4D shows data bit flags with respect to the data bits shown in FIG. 4C.

FIG. 4E shows that error-corrected data bits are modulated and converted to a NRZ bit sequence having three bits with errors. The data bit flags shown in FIG. 4D are converted to channel flags as shown in FIG. 4F to indicate error-corrected bits and other bits in the NRZ bit sequence shown in FIG. 4E.

Aspects of the present invention can be applied to a data processing apparatus transmitting/receiving data to/from an external terminal or an external server via a wired and/or a wireless communication network. The data processing apparatus, which transmits/receives data to/from the external terminal or the external server via the wired and/or a wireless communication network, performs modulation/demodulation on digital signals and analog signals in the data processing apparatus.

The data processing apparatus transmitting/receiving data to/from an external terminal or an external server via the wired and/or the wireless communication network converts digital data to analog data by converting the digital data to phase data using various phase shift modulation methods. Alternatively, the data processing apparatus determines a phase from analog data and converts the analog data to digital data. An example of the phase shift modulation methods used in the data processing apparatus is a binary phase shift key (BPSK) method, which modulates one bit symbol by dividing the one bit symbol into two phases. Another example of the phase shift modulating methods is a quadrature phase shift keying (QPSK) method, which modulates a two bit symbol by dividing the two bit symbol into four phases. Similarly, an 8-PSK method is a method of modulating a three bit symbol by dividing the three bit symbol into five phases.

For the data processing apparatuses 100 and 200 shown in FIGS. 1 and 2 to transmit/receive data via a wired/wireless communication network, the data processing apparatuses 100 and 200 sample analog signals, equalize the sampled signals by using an equalizer, and perform signal processing on the equalized signals using signal processing such as least mean square error (LMSE), PRML, etc.

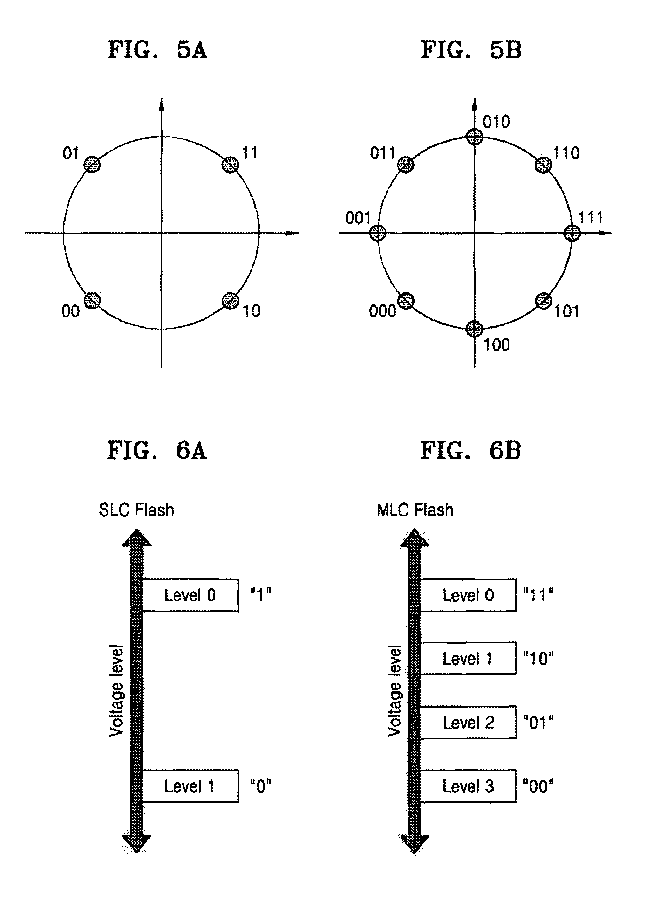

FIGs. 5A and 5B are diagrams for describing a method of phase shift modulation used in the data processing apparatuses 100 and 200. In a case where the data processing apparatuses 100 and 200 shown in FIGS. 1 and 2 transmit/receive data via a wired/wireless communication network. FIG. 5A shows a QPSK modulation method in which a symbol (two bits) is modulated into four phases and FIG. 5B shows an 8-PSK modulation method in which a symbol (three bits) is modulated to eight phases. When the data processing apparatuses 100 and 200 perform demodulation, the data processing apparatuses 100 and 200 detect phases from received analog signals and convert the analog signals to digital signals according to the detected phases. Since phases are values that can be distinguished from each other, the detection of phases from received analog signals is conceptually identical to obtaining RF signals from analog signals when data is read out from an information storage medium.

In a case where the data processing apparatuses 100 and 200 transmit/receive data via a communication network, the final phase data before the data processing apparatuses 100 and 200 modulate/demodulate the data may be conceptually the same as the NRZI pattern decoded by a first PRML, as is shown in FIG. 3E. However, while one symbol indicates one bit in FIG. 3E, the number of bits indicated by one symbol is different according to modulation/demodulation methods in a case where data is transmitted/received via a communication network.

Similarly as the data processing apparatuses 100 and 200 shown in FIGS. 1 and 2 performed decoding using the difference between a received RF level and an ideal RF level according to a method such as the linear mean square error (LMSE) and generate the signal as shown in FIG. 3E, in a case where the data processing apparatuses 100 and 200 transmit/receive data via a wired and/or a wireless communication network, the data processing apparatuses 100 and 200 may perform decoding using a phase difference according to a method such as the LMSE. For example, in a case of 8-PSK, it is assumed that the finally detected phase is 010, and it is determined that the first two bits of the phase of a signal are not 01 but 10 after error correction. In this case, it is clear that the original bit value of the phase of the signal is either 100 or 101, and in FIG. 5B, a signal having less phase difference with the phase 010 of the received signal is a signal having the phase of 101. Thus, during signal processing, the signal is decoded to have the phase 101, which, as illustrated in FIG. 5B, is less different from the phase 010 of the finally received signal. Therefore, the quality of signals is improved by repeatedly performing signal processing and error correction.

Aspects of the present invention can also be applied to perform signal processing on data extracted from a memory. FIGs. 6A and 6B are diagrams illustrating an application of aspects of the present invention when signals detected from a flash memory are processed.

In a case where one bit is stored in one cell, the cell is referred as a single layer cell (SLC) flash memory. In a case where a plurality of bits is stored in one cell, the cell is referred as a multi layer cell (MLC) flash memory.

FIG. 6A and 6B show voltage levels of a SLC flash memory and a MLC flash memory, respectively. The voltage of the SLC flash memory may be divided into two levels, whereas the voltage of a two bit MLC flash memory may be divided into four levels. A flash memory distinguishes data using threshold values (TV) when data is reproduced. A SLC flash memory has one TV to distinguish level 0 and level 1, whereas a two bit MLC flash memory has total three TVs; a TV 0 to distinguish level 0 and level 1, a TV 1 to distinguish level 1 and level 2, and a TV 2 to distinguish level 2 and level 3. In this regard, a three bit MLC flash memory, in which three bits are stored in one cell, distinguishes signals using seven TVs.

To determine the hard value of a bit stored in a cell, the data processing apparatuses 100 and 200 that read out data from a flash memory use the TV 1 to determine a voltage of the cell, in a case where the flash memory is a two bit MLC flash memory as shown in FIG. 6B. If the voltage is smaller than the TV 1, it is determined that the voltage is at either level 2 or level 3. If the voltage is greater than the TV 1, it is determined that the voltage is at either level 0 or level 1. If the voltage of the cell is greater than the TV 1, the data processing apparatuses 100 and 200 decode the value of the first bit in the two bit MLC flash memory to 1. To decode the second bit value, the data processing apparatuses 100 and 200 determine a voltage of the cell by using the TV 0 to decode the value of second bit, fix the value of the second bit to 1 in a case where the voltage of the cell is greater than the TV 0, and decode the value of the second bit to 0.

If the data processing apparatuses 100 and 200 determine a voltage stored in a cell two bit MLC flash memory and the voltage level is between the TV 1 and the TV 2, the data processing apparatuses 100 and 200 decode a level value of the voltage to be 01. After the data processing apparatuses 100 and 200 perform error correction, if the true value of the first bit is not 0 but is 1 and the true value of second bit cannot be found, the true bit value stored in a cell of the two bit MLC flash memory is either 10 or 11.

The error correcting units 120 and 220 generate a data bit flag, which indicates that the first bit of two bits is an error-corrected bit, and transmit a data bit and the data bit flag to the signal processing units 110 and 210 again. The signal processing units 110 and 210 decode a value of a voltage level by using the data bit and the data bit flag received from the error correcting units 120 and 220. In other words, the signal processing units 110 and 210 decode the two bits to ten bits during signal processing for the second time, using the fact that because the measured voltage of a cell is between TV 1 and TV 2, the value of the voltage of the cell will more likely be 10 rather than 11. Accordingly, errors can be corrected when an embodiment of the present invention is applied to a flash memory, and thus signals of improved quality can be obtained.

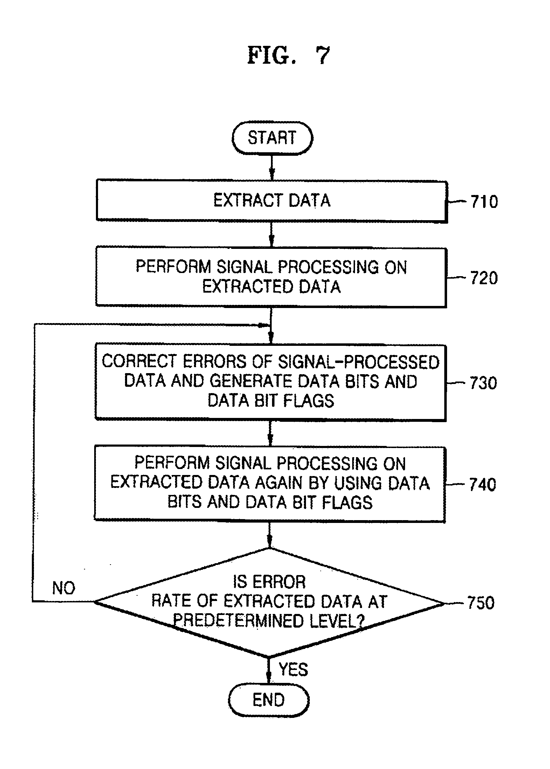

FIG. 7 is a flowchart of a method of processing data according to an embodiment of the present invention. Referring to FIG. 7, the data processing apparatuses 100 and 200 either extract data from an information storage medium or a flash memory or receive data from an external server, or other similar apparatuses, via a communication network (operation 710). The signal processing units 110 and 210 perform signal processing on the extracted data (operation 720). The signal processing units 110 and 210 either convert analog signals to digital signals or vice versa, and decode the extracted data using a phase locked loop (PLL), an equalizer (EQ), a partial response maximum likelihood (PRML), or other similar apparatuses and/or methods.

The signal processing units 110 and 210 send the signal-processed data to the error correcting units 120 and 220. In a case where the extracted data is data modulated after error correction encoding, the data processing apparatuses 100 and 200 demodulate the data on which signal processing is performed by the signal processing units 110 and 210, and send the demodulated data to the error correcting units 120 and 220.

The error correcting units 120 and 220 correct errors of the signal-processed data and generate data bits and data bit flags indicating error-corrected bits among the data bits (operation 730). The error correcting units 120 and 220 feed back the data bits and the data bit flags to the signal processing units 110 and 120. In a case where the extracted data is data demodulated before being input to the error correcting units 120 and 220 because the data has been modulated after error correction encoding, the data processing apparatuses 100 and 200 generate channel bits by modulating the data bits generated by the error correcting units 120 and 220, and generate channel bit flags by modulating the data bit flags.

The signal processing units 110 and 210 perform signal processing on the extracted data again by using either the data bits and the data bit flags or the channel bits and the channel bit flags (operation 740). The data processing apparatuses 100 and 200 determine whether the error rate of the data on which the signal processing units 110 and 210 performed signal processing for the second time is at a predetermined level or not (operation 750), and return to operation 730 if the error rate is not at the predetermined level.

In all of the embodiments described above, the ECC may be any type of ECC, e.g., a Reed Solomon (RS) code, a Low-density parity-check LDPC code, a Turbo code, or other similar error correcting codes, used in a wired and/or a wireless communications or information storage media

According to a method of processing signals and correcting errors, high quality data can be reproduced despite a deterioration of signal reproducing conditions due to increasing the capacity of an information storage medium, increasing the speed of wired and/or a wireless communication, or other similar causes of signal deterioration. Furthermore, deterioration of signal reproducing conditions due to increasing the capacity of an information storage medium, increasing the speed of the wired and/or wireless communication, or other similar causes of the deterioration of signal reproducing conditions, can be overcome by partially modifying a reproduction module of a data processing apparatus even when an encoding standard is set, and thus increasing the capacity of an information storage medium and increasing the speed of the wired and/or wireless communication can be accomplished while maintaining compatability with respect to conventional products. Furthermore, a general information storage medium degrades the quality of signals as time passes, however, according to aspects of the present invention, it is possible to correct errors of signals with degraded quality, and thus the lifespan of an information storage medium can be extended.

According to aspects of the present invention, information regarding error correction is generated while errors of data are corrected and the data is processed to generate signals by using the information. Accordingly, a method and a data processing apparatus according to the present invention are capable of improving the quality of data.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s).

## Claims

1. A method of processing data, the method comprising:
decoding original data received from outside;
correcting errors of the decoded data and generating data bits and data bit flags indicating that data bits have been corrected by the error correction from among the data bits;
determining which data bits are error corrected data bits using the data bit flags;
decoding data bits which have not been corrected by the error correction using the data bits which have been corrected by the error correction; and
correcting errors of the decoded data.

2. The method of claim 1, further comprising demodulating the decoded data prior to the correcting of the errors of the decoded data if the original data is modulated after error correction code (ECC) encoding.

3. The method of claim 1, wherein, if the original data is interleaved after error correction code (ECC) encoding, the correcting of the errors of the decoded data comprises:
deinterleaving the decoded data;
correcting errors of the deinterleaved data and interleaving the error-corrected data; and
generating data bits and data bit flags indicating error-corrected data bits from among the data bits according to the interleaved data.

4. The method of claim 1, wherein the original data is received after at least one of being read out from an information storage medium and being received from an external terminal via a communication network.

5. The method of claim 1, wherein the correcting of the errors of the decoded data is performed using one of a Reed Solomon (RS) code, a Low-density parity-check (LDPC) code, or a Turbo code.

6. The method of claim 1, wherein the decoding of the data and the correcting of the errors of the decoded data are repeatedly performed until an error rate of the extracted data is reduced to a predetermined level.

7. A data processing apparatus, the apparatus comprising:
a signal processing unit decoding original data received from outside; and
an error correcting unit correcting errors of the decoded data and generating data bits and data bit flags indicating that data bits have been corrected by the error correction from among the data bits,
wherein the signal processing unit determines which data bits are error corrected data bits using the data bit flags; and decodes data bits which have not been corrected by the error correction using the data bits which have been corrected by the error correction; and
the error correcting unit corrects errors of the decoded data.

8. The apparatus of claim 7, wherein the original data is data modulated after error correction code (ECC) encoding, further comprising:
a demodulator demodulating the decoded data; and
a modulator generating channel bits by modulating the data bits and generating channel bit flags by modulating the data bit flags,
wherein the signal processing unit decodes the data according to the channel bits and the channel bit flags.

9. The apparatus of claim 7, wherein, in case where the original data is data interleaved after error correction code (ECC) encoding, the error correcting unit deinterleaves the decoded data, corrects errors of the deinterleaved data, interleaves the error-corrected data, and generates data bits and data bit flags indicating error-corrected data bits from among the data bits according to the interleaved data.

10. The apparatus of claim 7, wherein the original data is received after at least one of being read out from an information storage medium and being received from an external terminal via a communication network.

11. The apparatus of claim 7, wherein the error correcting unit corrects errors of the decoded data using one of a Reed Solomon (RS) code, a Low-density parity-check (LDPC) code, or a Turbo code.

12. A computer readable recording medium having recorded thereon a computer program for executing a method of processing data, the method comprising:
decoding original data received from outside;
correcting errors of the decoded data and generating data bits and data bit flags indicating that data bits have been corrected by the error correction from among the data bits;
determining which data bits are error corrected data bits using the data bit flags;
decoding data bits which have not been corrected by the error correction using the data bits which have been corrected by the error correction; and
correcting errors of the decoded data.

## Patentansprüche

1. Verfahren zum Verarbeiten von Daten, wobei das Verfahren Folgendes umfasst:
Decodieren von Originaldaten, die von außerhalb empfangen werden;
Korrigieren von Fehlern der decodierten Daten und Erzeugen von Datenbit und Datenbitflags, die angeben, dass Datenbit durch die Fehlerkorrektur unter den Datenbit korrigiert wurden;
Bestimmen, welche Datenbit fehlerkorrigierte Datenbit sind, unter Verwendung der Datenbitflags;
Decodieren von Datenbit, die nicht durch die Fehlerkorrektur korrigiert wurden, unter Verwendung der Datenbit, die durch die Fehlerkorrektur korrigiert wurden; und
Korrigieren von Fehlern der decodierten Daten.

2. Verfahren nach Anspruch 1, ferner umfassend Demodulieren der decodierten Daten vor dem Korrigieren d e r Fehler de r decodierten Daten, wenn die Originaldaten nach Fehlerkorrekturcode- bzw. ECC-Codierung moduliert sind.

3. Verfahren nach Anspruch 1, wobei, wenn die Originaldaten nach Fehlerkorrekturcode- bzw. ECC-Codierung verschachtelt sind, das Korrigieren der Fehler der decodierten Daten Folgendes umfasst:
Entschachteln der decodierten Daten;
Korrigieren von Fehlern der entschachtelten Daten und Verschachteln der fehlerkorrigierten Daten; und
Erzeugen von Datenbit und Datenbitflags, die fehlerkorrigierte Datenbit unter den Datenbit anzeigen, gemäß den verschachtelten Daten.

4. Verfahren nach Anspruch 1, wobei die Originaldaten empfangen werden, nachdem sie aus einem Informationsspeichermedium ausgelesen und/oder über ein Kommunikationsnetzwerk von einem externen Endgerät empfangen werden.

5. Verfahren nach Anspruch 1, wobei das Korrigieren der Fehler der decodierten Daten unter Verwendung eines Reed-Solomon- bzw. RS-Codes oder eines Codes des Low-Density Parity-Check (LDPC) oder eines Turbocodes durchgeführt wird.

6. Verfahren nach Anspruch 1, wobei das Decodieren der Daten und das Korrigieren de r Fehler der decodierten Daten wiederholt ausgeführt werden, bis eine Fehlerrate der extrahierten Daten auf einen Vorbestimmten Wert reduziert ist.

7. Datenverarbeitungsvorrichtung, wobei die Vorrichtung Folgendes umfasst:
eine Signalverarbeitungseinheit, die von außerhalb empfangene Originaldaten decodiert; und
eine Fehlerkorrigiereinheit, die Fehler der decodierten Daten korrigiert und Datenbit und Datenbitflag erzeugt, die anzeigen, dass Datenbit unter den Datenbit durch die Fehlerkorrektur korrigiert wurden,
wobei, die Signalverarbeitungseinheit unter Verwendung der Datenbitflags bestimmt, welche Datenbit fehlerkorrigierte Datenbit sind; und Datenbit, die nicht durch die Fehlerkorrektur korrigiert wurden, unt e r Verwendung de r Datenbit, die du r c h die Fehlerkorrektur korrigiert wurden, decodiert; und
die Fehlerkorrigiereinheit Fehler der decodierten Daten korrigiert.

8. Vorrichtung nach Anspruch 7, wo b e i die Originaldaten nach Fehlerkorrekturcode- bzw. ECC-Codierung modulierte Daten sind, ferner umfassend:
einen Demodulator, der die decodierten Daten demoduliert; und
einen Modulator, der durch Modulieren der Datenbit Kanalbit erzeugt und durch Modulieren der Datenbitflags Kanalbitflags erzeugt,
wobei die Signalverarbeitungseinheit die Daten gemäß den Kanalbit und den Kanalbitflags decodiert.

9. Vorrichtung nach Anspruch 7, wobei, falls die Originaldaten nach Fehlerkorrekturcode- bzw. ECC-Codierung verschachtelte Daten sind, die Fehlerkorrektureinheit die decodierten Daten entschachtelt, Fehler de r entschachtelten Daten korrigiert, die fehlerkorrigierten Daten verschachtelt und gemäß den verschachtelten Daten Datenbit und Datenbitflags erzeugt, die fehlerkorrigierte Datenbit unter den Datenbit anzeigen.

10. Vorrichtung nach Anspruch 7, wo b e i die Originaldaten empfangen werden, nachdem sie aus einem Informationsspeichermedium ausgelesen werden und/oder über ein Kommunikationsnetzwerk von einem externen Endgerät empfangen werden.

11. Vorrichtung nach Anspruch 7, wo b e i die Fehlerkorrigiereinheit Fehler der decodierten Daten unter Verwendung eines Reed-Solomon- bzw. RS-Codes oder eines Codes des Low-Density Parity-Check bzw. LDPC oder eines Turbocodes korrigiert.

12. Computerlesbares Aufzeichnungsmedium, auf dem ein Computerprogramm zum Ausführen eines Verfahrens zum Verarbeiten von Daten aufgezeichnet ist, wobei das Verfahren Folgendes umfasst:
Decodieren von Originaldaten, die von außerhalb empfangen werden;
Korrigieren von Fehlern der decodierten Daten und Erzeugen von Datenbit und Datenbitflags, die angeben, dass Datenbit durch die Fehlerkorrektur unter den Datenbit korrigiert wurden;
Bestimmen, welche Datenbit fehlerkorrigierte Datenbit sind, unter Verwendung der Datenbitflags;
Decodieren von Datenbit, die nicht durch die Fehlerkorrektur korrigiert wurden, unter Verwendung der Datenbit, die durch die Fehlerkorrektur korrigiert wurden; und
Korrigieren von Fehlern der decodierten Daten.

## Revendications

1. Procédé de traitement de données, le procédé comprenant les étapes consistant à :
décoder de s données originales reçues depuis l'extérieur ;
corriger les erreurs des données décodées et générer des bits de données et des drapeaux de bits de données indiquant que des bits de données ont été corrigés par la correction d'erreurs parmi les bits de données ;
déterminer quels bits de données sont des bits de données ayant fait l'objet d'une correction d'erreurs à l'aide des drapeaux de bits de données ;
décoder les bits de données qui n'ont pas été corrigés par la correction d'erreurs à l'aide des bits de données qui ont été corrigés par la correction d'erreurs ; et
corriger les erreurs des données décodées.

2. Procédé selon la revendication 1, comprenant en outre l'étape consistant à démoduler les données décodées préalablement à l'étape consistant à corriger les erreurs des données décodées s i le s données originales sont modulées après un codage ECC (code de correction d'erreurs).

3. Procédé selon la revendication 1, dans lequel, si les données originales sont imbriquées après un codage ECC (code de correction d'erreurs), l'étape consistant à corriger les erreurs des données décodées comprend les étapes consistant à :
désimbriquer les données décodées ;
corriger les erreurs des données désimbriquées et imbriquer les données ayant fait l'objet d'une correction d'erreurs ; et
générer des bits de données et des drapeaux de bits de données indiquant des bits de données ayant fait l'objet d'une correction d'erreurs parmi les bits de données selon les données imbriquées.

4. Procédé selon la revendication 1, dans lequel les données originales sont reçues après avoir été lues à partir d'un support de stockage d'informations et/ou après avoir été reçues à partir d'un terminal externe par l'intermédiaire d'un réseau de communication.

5. Procédé selon la revendication 1, dans lequel l'étape consistant à corriger les erreurs des données décodées est exécutée en utilisant un code parmi un code Reed Solomon (RS), un code de contrôle de parité à faible densité (LDPC), ou un code Turbo.

6. Procédé selon la revendication 1, dans lequel l'étape consistant à décoder les données et l'étape consistant à corriger les erreurs des données décodées sont exécutées à plusieurs reprises jusqu'à ce qu'un taux d'erreurs des données extraites soit réduit à un niveau prédéterminé.

7. Appareil de traitement de données, l'appareil comprenant :
une unité de traitement de signal décodant des données originales reçues depuis l'extérieur ; et
une unité de correction d'erreurs corrigeant les erreurs des données décodées et générant des bits de données et des drapeaux de bits de données indiquant que des bits de données ont été corrigés par la correction d'erreurs parmi les bits de données,
l'unité de traitement de signal déterminant quels bits de données sont des bits de données ayant fait l'objet d'une correction d'erreurs à l'aide des drapeaux de bits de données ; et décodant des bits de données qui n'ont pas été corrigés par la correction d'erreurs au moyen des bits de données qui ont été corrigés par la correction d'erreurs ; et
l'unité de correction d'erreurs corrigeant les erreurs des données décodées.

8. Appareil selon la revendication 7, dans lequel les données originales sont des données modulées après un codage ECC (code de correction d'erreurs), comprenant en outré :
un démodulateur démodulant les données décodées ; et
un modulateur générant des bits canal en modulant les bits de données et générant des drapeaux de bits canal en modulant les drapeaux de bits de données,
l'unité de traitement de signal décodant les données selon les bits canal et les drapeaux de bits canal.

9. Appareil selon la revendication 7, dans lequel, dans le cas où les données originales sont des données imbriquées après un codage ECC (code de correction d'erreurs), l'unité de correction d'erreurs désimbrique les données décodées, corrige les erreurs des données désimbriquées, imbrique les données ayant fait l'objet d'une correction d'erreurs, et génère des bits de données et des drapeaux de bits de données indiquant des bits de données ayant fait l'objet d'une correction d'erreurs parmi les bits de données selon les données imbriquées.

10. Appareil selon la revendication 7, dans lequel les données originales sont reçues après avoir été lues à partir d'un support de stockage d'informations et/ou après avoir été reçues à partir d'un terminal externe par l'intermédiaire d'un réseau de communication.

11. Appareil selon la revendication 7, dans lequel l'unité de correction d'erreurs corrige les erreurs des données décodées en utilisant un code parmi un code Reed Solomon (RS), un code de contrôle de parité à faible densité (LDPC), ou un code Turbo.

12. Support d' enregistrement exploitable par ordinateur sur lequel est enregistré un programme d'ordinateur destiné à exécuter un procédé de traitement de données, le procédé comprenant les étapes consistant à :
décoder de s données originales reçues depuis l'extérieur ;
corriger les erreurs des données décodées et générer des bits de données et des drapeaux de bits de données indiquant que des bits de données ont été corrigés par la correction d'erreurs parmi les bits de données ;
déterminer quels bits de données sont des bits de données ayant fait l'objet d'une correction d'erreurs à l'aide des drapeaux de bits de données ;
décoder des bits de données qui n'ont pas été corrigés par la correction d'erreurs à l'aide des bits de données qui ont été corrigés par la correction d'erreurs ; et
corriger les erreurs des données décodées.
